# EUROPÄISCHE PATENTSCHRIFT

(11) **EP 4 243 990 B1**
(45) Veröffentlichungstag und Bekanntmachung des Hinweises auf die Patenterteilung: **08.04.2026**
(21) Anmeldenummer: 21807024.1
(22) Anmeldetag: 05.11.2021
(51) Int. Cl.: B02C 17/20, B02C 17/22

(54) **VERFAHREN ZUR GEWINNUNG VON NATURKAUTSCHUK AUS PFLANZENMATERIAL**
METHOD FOR OBTAINING NATURAL RUBBER FROM PLANT MATERIAL
PROCÉDÉ POUR OBTENIR DU CAOUTCHOUC NATUREL À PARTIR DE MATIÈRE VÉGÉTALE

(30) Priorität: 16.11.2020 DE 102020214356
(43) Veröffentlichungstag der Anmeldung: 20.09.2023
(73) Patentinhaber: Continental Reifen Deutschland GmbH, 30175 Hannover (DE); Fraunhofer-Gesellschaft zur Förderung der angewandten Forschung e.V., 80686 München (DE)
(72) Erfinder: BEHM, Frank, 30165 Hannover (DE); HERZOG, Katharina, 30165 Hannover (DE); JANCZAK, Norbert, 30165 Hannover (DE); RECKER, Carla, 30165 Hannover (DE); VENZ, Carsten, 30165 Hannover (DE); PRÜFER, Dirk, 80686 München (DE); SCHULZE GRONOVER, Christian, 80686 München (DE)
(74) Vertreter: Continental Corporation
(86) Internationale Anmeldenummer: PCT/EP2021/080710
(87) Internationale Veröffentlichungsnummer: WO 2022/101091

(56) Entgegenhaltungen:
- DE-A1- 102013 107 279
- US-A- 1 807 383
- US-A- 4 580 734

## Beschreibung

Die Erfindung betrifft ein Verfahren zur Gewinnung von Naturkautschuk aus Pflanzenmaterial, enthaltend zumindest den Schritt des Zermahlens des Pflanzenmaterials mit zumindest einer Kugelmühle mit Mahlkörpern. Ferner betrifft die Erfindung die den nach diesem Verfahren gewonnenen Naturkautschuk und die Verwendung zumindest einer Kugelmühle mit Mahlkörpern zum Zermahlen von Pflanzenmaterial bei der Gewinnung von Naturkautschuk aus Pflanzenmaterial.

Viele Verbrauchsgüter des heutigen Alltags werden aus Kautschuk hergestellt. Bezüglich der möglichen Beanspruchung und der Qualität ist hierbei der Naturkautschuk synthetisch hergestelltem Kautschuk häufig überlegen. Naturkautschuk wurde über lange Zeit im Wesentlichen aus Kautschukbäumen der Gattung Hevea, insbesondere aus *Hevea brasiliensis* gewonnen, einer Pflanzenart, die im Wesentlichen in Asien angebaut wird.

In jüngerer Zeit wird nach geeigneten Alternativen zur Kautschukgewinnung gesucht, wobei vor allem Pflanzen im Fokus des Interesses stehen, die auch unter den klimatischen Bedingungen Mitteleuropas gedeihen. Als eine geeignete Alternative zur Gewinnung von Naturkautschuk ist der Löwenzahn bekannt, insbesondere der Russische Löwenzahn (*Taraxacum kok-saghyz*). Letzterer kann mehr als 10 % (w/w) der Trockenmasse Kautschuk pro Pflanze liefern und der gewonnene Naturkautschuk ist dem des *Hevea brasiliensis* sehr ähnlich.

Verfahren zur Gewinnung von Naturkautschuk aus Löwenzahn und anderen Pflanzen sowie die Verwendung des Naturkautschuks für Gummiprodukte, wie Reifen, sind bereits bekannt.

Die WO 2018036825 A1 beschreibt ein Verfahren der eingangs genannten Art, bei dem Löwenzahn-Pflanzenteile zu einem Brei zerkleinert und/oder ausgequetscht werden und der Brei in eine inulinreiche, gummiarme Phase und eine gummireiche, inulinarme Phase separiert wird. Das Zerkleinern und Ausquetschen kann dabei üblicherweise mit einer Perl- oder Kugelmühle erfolgen.

Die DE 10 2013 107 279 A1 offenbart ebenfalls ein Verfahren zur Gewinnung von Naturkautschuk aus Pflanzenmaterial gemäß der eingangs genannten Art. Nichtmetallische Auskleidungen und/oder Mahlkörper mit einer nichtmetallischen Oberfläche werden in dieser Schrift nicht erwähnt.

Auch in der US 814,407 wird bereits die Verwendung von Kugelmühlen für die Behandlung von kautschukenthaltenden Pflanzenteilen beschrieben.

Häufig sind Kugelmühlen im Einsatz, die Gusseisenkugeln oder Stahlkugeln als Mahlkörper in einem Mahlraum aus Stahlblech mit Verschleißplatten verwenden.

Mit derartigen Kugelmühlen kann Naturkautschuk gewonnen werden, der jedoch nicht immer die gewünschte Qualität und hohe Alterungsstabilität aufweist.

Der Erfindung liegt die Aufgabe zu Grunde, ein Verfahren zur Gewinnung von Naturkautschuk aus Pflanzenmaterial, enthaltend zumindest den Schritt des Zermahlens des Pflanzenmaterials mit zumindest einer Kugelmühle mit Mahlkörpern, bereitzustellen, mit dem ein Naturkautschuk mit hoher Qualität und verbesserter Alterungsbeständigkeit erhalten werden kann.

Gelöst wird diese Aufgabe erfindungsgemäß dadurch, dass die Kugelmühle eine nichtmetallische Auskleidung aufweist und/oder die Mahlkörper zumindest eine nichtmetallische Oberfläche aufweisen.

Überraschenderweise hat sich gezeigt, dass bei Verzicht auf metallisches Material in der Kugelmühle, welches mit dem zu zermahlenden Pflanzenmaterial in Kontakt kommen kann, ein Naturkautschuk erhalten werden kann, dessen Qualität verbessert ist und damit auch zu verbesserten und reproduzierbaren Produkten führt. Der Naturkautschuk zeichnet sich vor allem auch durch ein verbessertes Alterungsverhalten (verringerten Polymerabbau) aus. Dies liegt vermutlich darin begründet, dass bei Verzicht auf metallisches Material keine die Kautschukstabilität und -qualität beeinträchtigen Schwermetallionen in den Kautschuk gelangen können.

Vorzugsweise ist die nichtmetallische Auskleidung und/oder die nichtmetallische Oberfläche der Mahlkörper frei von Schwer- und/oder Übergangsmetallen, vorzugsweise frei von Cobalt, Eisen, Kupfer, Mangan und Nickel, besonders bevorzugt frei von Eisen. Eisen hat sich besonders relevant in Bezug auf die Beeinträchtigung der Alterungsbeständigkeit gezeigt und sollte auch bei nichtmetallischen Auskleidungen und Oberflächen nicht in Form von beispielsweise löslichen Salzen vorhanden sein.

Gemäß einer bevorzugten Weiterbildung der Erfindung besteht bzw. bestehen die nichtmetallische Auskleidung und/oder die nichtmetallische Oberfläche der Mahlkörper aus Keramik, Glas, Mineralien, Porzellan und/oder polymeren Werkstoffen.

Besonders gute Ergebnisse hinsichtlich des reduzierten Polymerabbaus und damit der Alterungsbeständigkeit lassen sich erzielen, wenn die nichtmetallische Auskleidung und/oder die nichtmetallische Oberfläche der Mahlkörper aus keramischem Werkstoff besteht bzw. bestehen. Die keramischen Werkstoffe basieren z. B. auf Silikat-Rohstoffen, oxidischen Rohstoffen oder nichtoxidischen Rohstoffen. Vorzugsweise besteht bzw. bestehen die nichtmetallische Auskleidung und/oder die nichtmetallische Oberfläche der Mahlkörper aus einer Aluminiumoxidkeramik mit insbesondere zwischen 90 und 96 % Aluminiumoxid. Eingesetzt werden kann beispielsweise Korund (Al₂O₃).

Bei der Ausgestaltung der Kugelmühle können die Auskleidung und die Oberfläche der Mahlkörper aus unterschiedlichen Werkstoffen gefertigt sein, die möglichst abriebfest sein sollen. Die Mahlkörper sollten zumindest eine nichtmetallische Oberfläche aufweisen. Sie können aber auch vollständig aus dem nichtmetallischen Material bestehen.

Um den gegenseitigen Verschleiß zu minimieren, hat es sich als vorteilhaft erwiesen, wenn die nichtmetallische Auskleidung und die nichtmetallische Oberfläche der Mahlkörper aus demselben Werkstoff, beispielsweise Korund, bestehen.

Bei dem erfindungsgemäßen Verfahren wird zumindest eine Kugelmühle eingesetzt. Es ist auch möglich, dass mehrere Kugelmühlen vorzugsweise hintereinander mit unterschiedlichen Dimensionen, Mahlkörpern und Auskleidungen eingesetzt werden. Gemäß einer bevorzugten Weiterbildung der Erfindung ist die Kugelmühle eine Trommelmühle oder eine Rohrmühle bzw. sind die Kugelmühlen Trommelmühlen und/oder Rohrmühlen. Diese Mühlentypen ermöglichen ein kontinuierliches Verfahren zum Zermahlen des Pflanzenmaterials.

Das Zermahlen des Pflanzenmaterials in der Kugelmühle erfolgt in Anwesenheit einer Flüssigkeit, vorzugsweise Wasser. Auf diese Weise kann der Naturkautschuk gut aus dem Pflanzenmaterial gewonnen/extrahiert werden.

Um das Pflanzenmaterial gut verarbeiten zu können und einen möglichst reinen Naturkautschuk zu erhalten, hat es sich als vorteilhaft erwiesen, wenn das Pflanzenmaterial vor dem Zermahlen in der Kugelmühle gereinigt, vorzugsweise mit Wasser gewaschen, ist. An der Oberfläche anhaftenden Stoffe, wie Sand, Lehm und Ton, werden dabei entfernt. Die Reinigung kann in üblichen, für die Reinigung von Pflanzenmaterial üblichen Vorrichtungen, Verfahren und üblichen Reinigungssubstanzen erfolgen.

Um die Verweildauer des Pflanzenmaterials in der Kugelmühle zu verkürzen, hat es sich als positiv erwiesen, wenn das Pflanzenmaterial vor dem Zermahlen in der Kugelmühle einer Vorzerkleinerung unterworfen ist. Die Vorzerkleinerung kann durch übliche schneidende oder quetschende Verfahren wie z. B. durch Schneidmaschinen, Hammermühlen oder ähnliches erfolgen.

Das erfindungsgemäße Verfahren kann auf alle Pflanzen angewendet werden, die zur Naturkautschukgewinnung geeignet sind. Besonders bevorzugt stammt das Pflanzenmaterial von der Pflanzengattung des Löwenzahns *(Taraxacum).* Das Pflanzenmaterial dieser Gattung lässt sich besonders gut mit diesem Verfahren zermahlen.

Um einen besonders hohen Anteil an Naturkautschuk aus dem Pflanzenmaterial zu gewinnen, stammt das Pflanzenmaterial von der Pflanzenart des Russischen Löwenzahns (*Taraxacum kok-saghyz*) oder Abkömmlingen (Hybriden) von diesem.

Bei Einsatz der Pflanzengattung des Löwenzahns kann die gesamte Pflanze bei dem Verfahren Zermahlen werden. Vorzugsweise umfasst das Pflanzenmaterial jedoch im Wesentlichen die Wurzeln und das Hypokotyl des Löwenzahns, da diese Pflanzenteile den größten Anteil an Naturkautschuk enthalten.

Die Erfindung umfasst auch den Naturkautschuk, der nach dem Verfahren gewonnen wurde. Der Naturkautschuk zeichnet sich wegen eines geringen Gehaltes an Schwermetallionen durch eine gute Qualität und eine verbesserte Alterungsbeständigkeit aus. Der Naturkautschuk kann zur Herstellung unterschiedlichster Gummiprodukte, vorzugsweise Reifen verwendet werden. Produkte aus diesem Naturkautschuk, wie z. B. Fahrzeugreifen, zeichnen sich durch gute und alterungsstabile mechanische und dynamische Eigenschaften aus. Der nach dem Verfahren gewonnene Naturkautschuk kann dafür wie ein üblicher, aus *Hevea brasiliensis* gewonnener Naturkautschuk und zusammen mit üblichen Mischungsbestandteilen, wie Füllstoffen, Alterungsschutzmitteln, Weichmacher, Schwefel und Vulkanisationsbeschleunigern, zu Vulkanisaten durch Mischen und Vulkanisation verarbeitet werden.

Die Erfindung betrifft ferner die Verwendung zumindest einer Kugelmühle mit Mahlkörpern zum Zermahlen von Pflanzenmaterial bei der Gewinnung von Naturkautschuk aus Pflanzenmaterial, wobei die Kugelmühle eine nichtmetallische Auskleidung aufweist und/oder die Mahlkörper zumindest eine nichtmetallische Oberfläche aufweisen.

Die Erfindung soll nun anhand von Vergleichs- und Ausführungsbeispielen näher erläutert werden, wobei die Tabelle 1 die verwendeten Auskleidungen und Mahlkörper und die erhaltenen Analyseergebnisse angibt.

1 - 4 kg mit Wasser gereinigte frische Wurzeln des Russischen Löwenzahns wurden in der 5 bis 10-fachen Menge Wasser für 20 bis 60 Minuten gekocht, vom Kochwasser getrennt und mit der 3 bis 10-fachen Menge Frischwasser in eine Kugelmühle (KM 30, 30 L Nennvolumen, 30 kg Mahlkugeln (1,5 bis 6 cm Kugeldurchmesser)) überführt. Das Kugel-Wurzel-Wassergemisch wurde anschließend mit einer Umdrehungszahl von 0,5 bis 0,75 * n(kritisch) 1 bis 4 h vermahlen. Die exakten Mahlparameter sind von Wurzelqualtität (Größe etc.) abhängig, das optimale Mahlergebnis zeichnet sich durch gebildete Kautschukflocken von ca. 0,5 bis 5 cm Durchmesser und in einem homogenen Pflanzenbrei aus. Dabei wurden gemäß Tabelle 1 die Auskleidung der Mühle und die Mahlkörper variiert. Die erhaltenen Suspensionen wurden z. B. mit einem Lochblech, Lochdurchmesser 5 mm (andere Filtersiebe oder -geräte oder -rechen sind ebenfalls möglich und geeignet, Flotation kann ebenfalls zur Trennung eingesetzt werden) filtriert, der Filterkuchen enthält die im Mahlprozess gebildeten Kautschukflocken. Die Kautschukflocken wurden mehrfach mit Wasser gewaschen und anschließend bei Raumtemperatur getrocknet. Die Mahlkugeln konnten mit Hilfe eines Kugelfanges bei der Entleerung der Mühle separiert werden.

Die auf diese Weise erhaltenen Naturkautschuke wurden hinsichtlich folgender Paramater analysiert:
- Eisengehalt (Fe-Gehalt) des Kautschuks über die 550 °C-Asche (100 - 150 mg) mittels RFA (Röntgenfluoreszensspektroskopie; XRF) wird direkt in XRF SpectroMicro Sample Cups (6.1 mm ID) mit PROLENE Film der Firma Spectro mit dem Gerät SPECTRO XEPOS.
- Zahlenmittlere Molmasse Mₙ und gewichtsmittlere Molmasse M_{w} des Naturkautschuks mittels Gelpermeationschromatographie (GPC) mit Tetrahydrofuran (THF) als Elutionsmittel gegen Polystyrolstandard gemäß DIN 55672-1

**Tabelle 1**

| **Auskleidung** | **Mahlkörper** | **Fe-Gehalt des Kautschuks [%]** | **Mₙ [g/mol]** | **M_{w} [g/mol]** |
|---|---|---|---|---|
| Edelstahl | Edelstahl | 0,98 | 270000 | 1200000 |
| Edelstahl | Korund (Al₂O₃) | 0,11 | 580000 | 1900000 |
| Korund (Al₂O₃) | Korund (Al₂O₃) | 0,05 | 680000 | 2100000 |

Aus der Tabelle 1 wird ersichtlich, dass durch die Verwendung von nichtmetallischem Material als Auskleidung und/oder für die Mahlkörper der Polymerabbau und damit die Alterung des Naturkautschuks deutlich vermindert werden kann. Besonders vorteilhaft ist es, wenn Auskleidung und Mahlkörper aus Korund bestehen.

## Patentansprüche

1. Verfahren zur Gewinnung von Naturkautschuk aus Pflanzenmaterial, enthaltend zumindest den Schritt des Zermahlens des Pflanzenmaterials mit zumindest einer Kugelmühle mit Mahlkörpern, **dadurch gekennzeichnet, dass** die Kugelmühle eine nichtmetallische Auskleidung aufweist und/oder die Mahlkörper zumindest eine nichtmetallische Oberfläche aufweisen.

2. Verfahren zur Gewinnung von Naturkautschuk aus Pflanzenmaterial nach Anspruch 1, **dadurch gekennzeichnet, dass** die nichtmetallische Auskleidung und/oder die nichtmetallische Oberfläche der Mahlkörper frei von Schwer- und/oder Übergangsmetallen ist bzw. sind.

3. Verfahren zur Gewinnung von Naturkautschuk aus Pflanzenmaterial nach Anspruch 2, **dadurch gekennzeichnet, dass** die nichtmetallische Auskleidung und/oder die nichtmetallische Oberfläche der Mahlkörper frei von Eisen ist bzw. sind

4. Verfahren zur Gewinnung von Naturkautschuk aus Pflanzenmaterial nach zumindest einem der vorhergehenden Ansprüche, **dadurch gekennzeichnet, dass** die nichtmetallische Auskleidung und/oder die nichtmetallische Oberfläche der Mahlkörper aus Keramik, Glas, Mineralien, Porzellan und/oder polymeren Werkstoffen besteht bzw. bestehen.

5. Verfahren zur Gewinnung von Naturkautschuk aus Pflanzenmaterial nach zumindest einem der vorhergehenden Ansprüche, **dadurch gekennzeichnet, dass** die nichtmetallische Auskleidung und/oder die nichtmetallische Oberfläche der Mahlkörper aus keramischem Werkstoff, vorzugsweise aus einer Aluminiumoxidkeramik, besteht bzw. bestehen.

6. Verfahren zur Gewinnung von Naturkautschuk aus Pflanzenmaterial nach zumindest einem der vorhergehenden Ansprüche, **dadurch gekennzeichnet, dass** die nichtmetallische Auskleidung und die nichtmetallische Oberfläche der Mahlkörper aus demselben Werkstoff bestehen.

7. Verfahren zur Gewinnung von Naturkautschuk aus Pflanzenmaterial nach zumindest einem der vorhergehenden Ansprüche, **dadurch gekennzeichnet, dass** die Kugelmühle eine Trommelmühle oder Rohrmühle ist bzw. die Kugelmühlen Trommelmühlen und/oder Rohrmühlen sind.

8. Verfahren zur Gewinnung von Naturkautschuk aus Pflanzenmaterial nach zumindest einem der vorhergehenden Ansprüche, **dadurch gekennzeichnet, dass** das Zermahlen des Pflanzenmaterials in der Kugelmühle in Anwesenheit einer Flüssigkeit, vorzugsweise Wasser, erfolgt.

9. Verfahren zur Gewinnung von Naturkautschuk aus Pflanzenmaterial nach zumindest einem der vorhergehenden Ansprüche, **dadurch gekennzeichnet, dass** das Pflanzenmaterial vor dem Zermahlen in der Kugelmühle gereinigt, vorzugsweise mit Wasser gewaschen, ist.

10. Verfahren zur Gewinnung von Naturkautschuk aus Pflanzenmaterial nach zumindest einem der vorhergehenden Ansprüche, **dadurch gekennzeichnet, dass** das Pflanzenmaterial vor dem Zermahlen in der Kugelmühle einer Vorzerkleinerung unterworfen ist.

11. Verfahren zur Gewinnung von Naturkautschuk aus Pflanzenmaterial nach zumindest einem der vorhergehenden Ansprüche, **dadurch gekennzeichnet, dass** das Pflanzenmaterial von der Pflanzengattung des Löwenzahns (Taraxacum) stammt.

12. Verfahren zur Gewinnung von Naturkautschuk aus Pflanzenmaterial nach Anspruch 11, **dadurch gekennzeichnet, dass** das Pflanzenmaterial von der Pflanzenart des russischen Löwenzahns (*Taraxacum kok-saghyz*) oder Abkömmlingen (Hybriden) von diesem stammt.

13. Verfahren zur Gewinnung von Naturkautschuk aus Pflanzenmaterial nach Anspruch 11 oder 12, **dadurch gekennzeichnet, dass** das Pflanzenmaterial im Wesentlichen die Wurzeln und das Hypokotyl umfasst.

14. Verwendung zumindest einer Kugelmühle mit Mahlkörpern zum Zermahlen von Pflanzenmaterial bei der Gewinnung von Naturkautschuk aus Pflanzenmaterial, **dadurch gekennzeichnet, dass** die Kugelmühle eine nichtmetallische Auskleidung aufweist und/oder die Mahlkörper zumindest eine nichtmetallische Oberfläche aufweisen.

## Claims

1. Process for obtaining natural rubber from plant material containing at least the step of milling the plant material with at least one ball mill comprising milling media, **characterized in that** the ball mill has a nonmetallic lining and/or the milling media have at least a nonmetallic surface.

2. Process for obtaining natural rubber from plant material according to Claim 1, **characterized in that** the nonmetallic lining and/or the nonmetallic surface of the milling media is/are free of heavy metals and/or transition metals.

3. Process for obtaining natural rubber from plant material according to Claim 2, **characterized in that** the nonmetallic lining and/or the nonmetallic surface of the milling media is/are free of iron.

4. Process for obtaining natural rubber from plant material according to at least one of the preceding claims, **characterized in that** the nonmetallic lining and/or the nonmetallic surface of the milling media consist(s) of ceramic, glass, minerals, porcelain and/or polymeric materials.

5. Process for obtaining natural rubber from plant material according to at least one of the preceding claims, **characterized in that** the nonmetallic lining and/or the nonmetallic surface of the milling media consist(s) of a ceramic material, preferably an aluminium oxide ceramic.

6. Process for obtaining natural rubber from plant material according to at least one of the preceding claims, **characterized in that** the nonmetallic lining and the nonmetallic surface of the milling media consist of the same material.

7. Process for obtaining natural rubber from plant material according to at least one of the preceding claims, **characterized in that** the ball mill is a drum mill or tube mill or the ball mills are drum mills and/or tube mills.

8. Process for obtaining natural rubber from plant material according to at least one of the preceding claims, **characterized in that** the plant material is milled in the ball mill in the presence of a liquid, preferably water.

9. Process for obtaining natural rubber from plant material according to at least one of the preceding claims, **characterized in that** the plant material has been cleaned, preferably washed with water, before milling in the ball mill.

10. Process for obtaining natural rubber from plant material according to at least one of the preceding claims, **characterized in that** the plant material has been subjected to precomminution before milling in the ball mill.

11. Process for obtaining natural rubber from plant material according to at least one of the preceding claims, **characterized in that** the plant material originates from the plant genus dandelion (Taraxacum).

12. Process for obtaining natural rubber from plant material according to Claim 11, **characterized in that** the plant material originates from the plant species Russian dandelion (Taraxacum kok-saghyz) or offspring (hybrids) thereof.

13. Process for obtaining natural rubber from plant material according to Claim 11 or 12, **characterized in that** the plant material essentially comprises the roots and the hypocotyl.

14. Use of at least one ball mill comprising milling media for milling plant material when obtaining natural rubber from plant material, **characterized in that** the ball mill has a nonmetallic lining and/or the milling media have at least a nonmetallic surface.

## Revendications

1. Procédé d'obtention de caoutchouc naturel à partir de matière végétale, comprenant au moins l'étape consistant à broyer la matière végétale à l'aide d'au moins un broyeur à boulets équipé de corps de broyage, **caractérisé en ce que** le broyeur à boulets présente un revêtement non métallique et/ou les corps de broyage présentent au moins une surface non métallique.

2. Procédé d'obtention de caoutchouc naturel à partir de matière végétale selon la revendication 1, **caractérisé en ce que** le revêtement non métallique et/ou la surface non métallique des corps de broyage sont exempts de métaux lourds et/ou de métaux de transition.

3. Procédé d'obtention de caoutchouc naturel à partir de matière végétale selon la revendication 2, **caractérisé en ce que** le revêtement non métallique et/ou la surface non métallique des éléments de broyage sont exempts de fer.

4. Procédé d'obtention de caoutchouc naturel à partir de matière végétale selon au moins l'une des revendications précédentes, **caractérisé en ce que** le revêtement non métallique et/ou la surface non métallique des corps de broyage sont constitués de céramique, de verre, de minéraux, de porcelaine et/ou de matériaux polymères.

5. Procédé d'obtention de caoutchouc naturel à partir de matière végétale selon au moins l'une des revendications précédentes, **caractérisé en ce que** le revêtement non métallique et/ou la surface non métallique des corps de broyage sont constitués d'un matériau céramique, de préférence d'une céramique à base d'oxyde d'aluminium.

6. Procédé d'obtention de caoutchouc naturel à partir de matière végétale selon au moins l'une des revendications précédentes, **caractérisé en ce que** le revêtement non métallique et la surface non métallique des corps de broyage sont constitués du même matériau.

7. Procédé d'obtention de caoutchouc naturel à partir de matière végétale selon au moins l'une des revendications précédentes, **caractérisé en ce que** le broyeur à boulets est un broyeur à tambour ou un broyeur tubulaire, ou **en ce que** les broyeurs à boulets sont des broyeurs à tambour et/ou des broyeurs tubulaires.

8. Procédé d'obtention de caoutchouc naturel à partir de matière végétale selon au moins l'une des revendications précédentes, **caractérisé en ce que** le broyage de la matière végétale dans le broyeur à boulets s'effectue en présence d'un liquide, de préférence de l'eau.

9. Procédé d'obtention de caoutchouc naturel à partir de matière végétale selon au moins l'une des revendications précédentes, **caractérisé en ce que** la matière végétale est nettoyée, de préférence lavée à l'eau, avant d'être broyée dans le broyeur à boulets.

10. Procédé d'obtention de caoutchouc naturel à partir de matière végétale selon au moins l'une des revendications précédentes, **caractérisé en ce que** la matière végétale est soumise à un broyage préalable avant d'être broyée dans le broyeur à boulets.

11. Procédé d'obtention de caoutchouc naturel à partir de matière végétale selon au moins l'une des revendications précédentes, **caractérisé en ce que** la matière végétale provient de la famille des pissenlits (Taraxacum).

12. Procédé d'obtention de caoutchouc naturel à partir de matière végétale selon la revendication 11, **caractérisé en ce que** la matière végétale provient de l'espèce végétale du pissenlit russe (Taraxacum kok-saghyz) ou de ses descendants (hybrides).

13. Procédé d'obtention de caoutchouc naturel à partir de matière végétale selon la revendication 11 ou 12, **caractérisé en ce que** la matière végétale comprend essentiellement les racines et l'hypocotyle.

14. Utilisation d'au moins un broyeur à boulets avec des corps de broyage pour broyer des matières végétales lors de l'extraction de caoutchouc naturel à partir de matières végétales, **caractérisée en ce que** le broyeur à boulets présente un revêtement non métallique et/ou les corps de broyage présentent au moins une surface non métallique.
